(19) **Europäisches Patentamt**

**European Patent Office**

**Office européen des brevets**

(11) **EP 1 211 896 A2**

(12) **EUROPEAN PATENT APPLICATION**

(43) Date of publication:
05.06.2002 Bulletin 2002/23

(51) Int Cl.$^7$: **H04N 5/781**

(21) Application number: **01309527.8**

(22) Date of filing: **12.11.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **22.11.2000 US 718949**

(71) Applicant: **Matsushita Electric Industrial Co., Ltd.**
**Kadoma-shi, Osaka 571 (JP)**

(72) Inventors:
• **Bushmitch, Dennis**
**Sommerset, New Jersey 08691 (US)**

• **Braun, David**
**Denville, New Jersey 07834 (US)**
• **Lin, Wanrong**
**Brooklyn, New York (US)**
• **Mukherjee, Sarit**
**Morganville, New Jersey 07751 (US)**

(74) Representative: **Robey, James Edward et al**
**Wilson Gunn Gee,**
**Chancery House 53-64,**
**Chancery Lane**
**London WC2A 1QU (GB)**

(54) **System and method of providing data in one of a plurality of digital formats using an active disk**

(57)     A device is provided for storing signals in minimal format, which includes a controller for processing signals and a non-volatile storage medium. The device provides output signals in one of a plurality of digital formats. The output signals may be video signals, encrypted data, etc. In one embodiment, the device provides video signals in one of two digital video Standards, DV and MPEG-2, each Standard providing for discrete cosine transform (DCT) compressed signals which include macroblocks containing a plurality of DCT blocks. When raw video signals are received by the device, the DCT blocks are quantized according to one of the two quantization methods defined by the respective Standard, i. e., either DV or MPEG-2 and stored on the non-volatile storage medium in a minimal storage format consisting of DCT coefficients. Further, when signals are received in DV or MPEG-2 formats by the device for storage, such signals are decoded to obtain DCT coefficients and stored on storage medium in this minimal storage format. Upon a request for output of such stored signals, the controller selectively encodes the data in minimal storage format to either DV or MPEG-2 formats and outputs the encoded data to the requestor.

Fig. 2

**Description**

This invention relates generally to a system and method for the storage of digital data and more particularly to a system and method for delivering digital data stored in a minimal format in one of a plurality of different output formats.

An active disk is a computer storage medium (device) which includes a level of intelligence, *i.e.,* circuitry such as a central processing unit and associated random access memory which is programmable by the user. The addition of such intelligence to the computer storage device allows the implementation of additional applications and operating systems to the device. However, no prior art active disk is known which supplies data stored in a single minimal data format in one of a plurality of different output formats.

It is customary to compress different data types using various compression techniques in order to reduce the bandwidth or storage requirements. Data representing video, for example, can be encoded using a variety of digital video compression formats such as MPEG-1, MPEG-2, DV, DVC-Pro, Motion JPEG, and so on. Each of these encoding methods are designed to compress raw video and audio data to some degree and each differ in the method and amount of compression, the processing required to do the compression and the quality of the decoded video stream.

Other types of data may also be stored in an encoded format, e.g., encrypted data. In the area of data encryption technology for computer security, data content is stored in an unencrypted format and then encrypted for output according to certain encryption methods, *e.g.,* DES or RSA.

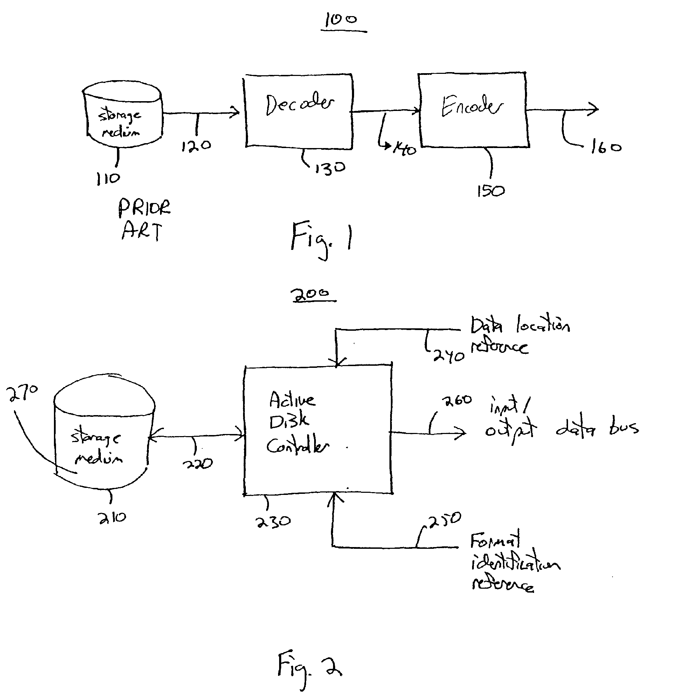

Transcoding is an operation where data using one type of encoding is converted to data using a second type of encoding. As shown in Fig. 1, a simple transcoder 100 may constructed by connecting the output of a decoder 130 operating on encoded data 120 stored on a storage medium 110 in a first digital format, producing un-encoded (*i.e.*, raw) data 140, to the input of an encoder 150 using a second digital format which could thereafter, by way of example, output a digital signal 160 in the second digital format. The intermediate form of data generated by this type of transcoding is the raw (un-encoded) data 140

In the prior art, systems which output a given dataset (*e.g.*, a video program in digital format) in more than one format either stored copies of the dataset in each format or converted from one format to another "on the fly" (*i.e.*, by transcoding the data). For video data, the transcoding operation typically involves completely decoding one format and re-encoding in a second format. However, each of these methods presents certain drawbacks. Storing a copy of a dataset in memory in each possible format multiplies the required space on the storage medium. Performing a transcoding operation on a dataset stored in a certain format requires extra processing power to completely decode the first format and then re-encoding in a second format. Additional losses may also be incurred during the generation of any of the intermediate forms.

It is therefore an object of the present invention to provide a system and method for supplying data stored on a storage medium in any one of a plurality of data formats which actively operates on such data as it is output and which therefore does not require that the data be stored in each of the plurality of data formats.

It is another object of the present invention to provide a system and method for supplying data in any one of a plurality of digital data formats which reduces the processing necessary because it does not require that the stored format be transcoded from a stored one of the plurality of digital data formats to the requested data format.

Various other objects, advantages and features of the present invention will become readily apparent from the ensuing detailed description and the novel features will be particularly pointed out in the appended claims.

The present invention is directed to a device that stores data in a minimal storage format and outputs data in one of a plurality of digital signal formats. The device comprises a storage medium for storing predetermined data in a minimal storage format and a controller which selectively converts the predetermined data into one of a plurality of digital signal formats and then outputs the converted data. Preferably, the controller also converts an input signal in any one of the plurality of output formats into the minimal storage formats for storage on the storage medium. The storage medium provides non-volatile storage and is preferably a conventional hard disk, although any type of non-volatile storage may be employed in the present invention. Preferably, the minimal storage format includes an additional compression step applied prior to storage using a conventional digital compression storage format.

In an embodiment, the data stored on the storage medium represents video signals, and the output formats consist of digital video compression formats. In a further embodiment, the data stored on the storage medium includes only quantized DCT coefficients of the corresponding video signal. In another embodiment, the data stored on the storage medium, preferably in compressed format, includes DCT coefficients, quantization data table selection data and intra-frame motion data. In yet a further embodiment, the output formats consist only of MPEG-2 and DV digital video formats. In yet another embodiment, the controller converts input raw video data into minimal storage format and stores the converted video data on the storage medium.

The above and related objects, features and advantages of the present invention will be more fully understood by reference to the following detailed description of the presently preferred, albeit illustrative, embodiments of the present invention when taken in conjunction with the accompanying drawing wherein:

Figure 1 is a block diagram of a simple transcoding system;

Figure 2 is a block diagram of a first embodiment of the active disk of the present invention;

Figure 3 is a logical diagram of the active disk controller of the present invention;

Figure 4 is a block diagram of further embodiments of the active disk of the present invention;

Figure 5 is a general block diagram of the software modules of the active disk controller of the third embodiment of the present invention;

Figure 6 is a hierarchical flow chart demonstrating the partial encoding of the stored video data into MPEG-2 video format in the third embodiment of the present invention;

Figure 7 is an exemplary pixel block diagram which is useful for describing the relationship between a 248 DCT block and an 88 DCT block; and

Figure 8 is a hierarchical flow chart demonstrating the partial decoding of the stored video data into DV video format in the third embodiment of the present invention.

Figure 9 is a hierarchical flow chart demonstrating the partial encoding of the stored video data into DV video format in the third embodiment of the present invention;

Figure 10 is a hierarchical flow chart demonstrating the partial decoding of the stored video data into MPEG-2 video format in the third embodiment of the present invention; and

Figure 11 is a block diagram of yet a further embodiment of the present invention.

In performing a transcoding operation of a digital signal encoded in a first digital format to a second digital format, a significant amount of computation time can be saved by stopping the decoding process at an intermediate point where a minimal data set is recovered, and then passing the minimal data set to an encoder which operates on the this minimal data set instead of raw data. The present invention takes advantage of the reduction in computation time afforded by operating only on such intermediate data (hereinafter referred to as "a minimal data set").

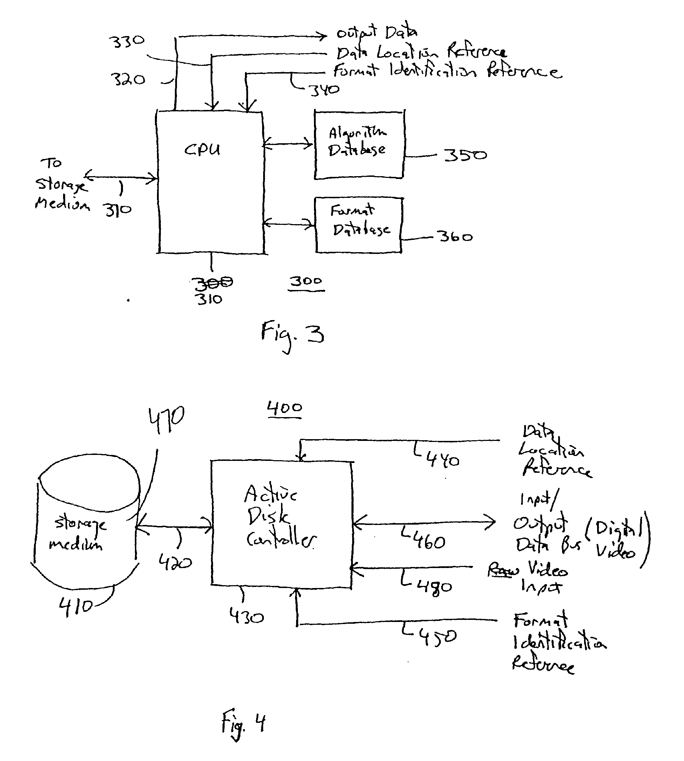

Referring now to the drawings, and in particular to the block diagram of active disk 200 in Fig. 2, the first embodiment of the present invention is shown where data 270 is stored on storage medium 210 in minimal data set format, such as decrypted data or partially encoded video data. Preferably, the minimal storage format includes an additional compression step applied prior to storage using a conventional digital compression storage format. This allows active disk 200 to supply an output signal 260 in one of a plurality of digital output formats by applying the stored data 270 to active disk controller 230 via data bus 220. Active disk controller 230 is preprogrammed to selectively output the stored data 270 in one of the plurality of digital output formats, under the control of the two input control signals, *i.e.,* data location reference 240 and format identification reference 250. Active disk 300 thereby eliminates the need for a combined decoding/encoding step, as would be required if a video signal was stored in a single digital compression format (*e.g.*, DV), or the need to store a plurality of versions of data 270 on storage medium 210, since data 270 is stored in minimal format and is supplied in one of a plurality of formats (*e.g.,* digital video or encrypted data) under the control of format identification reference 250 thereby reducing the amount of time required for processing the data for output. Data location reference 240 is used to select the particular portion of the data stored on storage medium 210 desired for output. As one of ordinary skill in the art will readily recognize, data location reference 240 may be configured to address data on storage medium 210 in conventional hard disk format (*i.e.*, cylinder, head, sector), in a flat file format (*i.e.*, memory address and number of bytes), or in any one of various other conventional memory addressing formats. In addition, although referred to as an active disk, as one of ordinary skill in the art will readily recognize, storage medium 210, which in the preferred embodiment is a conventional hard disk, may alternatively consist of any type of non-volatile memory storage device, including flash memory, battery-backed RAM, etc.

Referring now to the logical diagram of the active disk controller 300 in Fig. 3, a central processing unit (CPU) 310 is connected to a storage medium (not shown) via a bus 310. In the preferred embodiment, CPU 310 is a conventional microprocessor, but in an alternative embodiment, CPU 310 may be a specialized processor such as a DSP processor, a matrix processor, a floating point unit, etc. When the storage medium is a conventional hard disk, bus 370 may be a conventional hard disk interface, *e.g.*, IDE, SCSI, etc., in which case the conventional hard disk controller circuitry resides on the storage medium. Alternatively, in another embodiment, the hard disk controller functionality may be included within CPU 310, wherein bus 370 is then a low-level bus. CPU 310 includes two logical inputs, data location reference 330 and format identification reference 340, and a single data output signal 320 (*i.e.*, a data bus 320). As one of ordinary skill will readily recognize, other conventional control signals may also be present to control the transfer of data to or from storage medium 210. Further, CPU 310 operates according to predetermined programming using information necessary to encode the minimal data from the storage medium that is stored in an algorithm database 350 shown separately from CPU 310 in Fig. 3, based upon the inputs supplied on data location reference 330 and format identification reference 340. As one of ordinary skill will readily recognize, the information in algorithm database 350 may also be included within the core firmware for CPU 310. Further, certain information necessary to perform the encoding, as discussed in further detail below, may be stored in format database 360, also shown separately from CPU 310 in Fig. 3. As one of ordinary skill will readily recognize, the information included within format database 360 may also be included within the firmware/software for CPU 310, e.g., in a look-up table.

In a second embodiment of the present invention, the active disk supplies data in one of a plurality of digital video compression formats. For example, both MPEG-2 (I only) and DV digital video compression formats use a Discrete Cosine Transform (DCT) as the first step in performing the compression. The remaining compression steps for these digital video compression formats consist of manipulating the DCT coefficients to reduce the number of bits needed to represent the DCTs in the bit stream and constructing the final bit stream. The use of a minimal decoding DCT data set comprised of DCT coefficients to store the video data is selected because most digital compression formats use DCT coefficients to encode the video images in the digital video stream. For example, the primary difference between the MPEG and DV compression formats is in the quantization, compression, and packaging of the DCT coefficients themselves. In this invention, the DCT coefficients are obtained by either transforming the original raw video to DCT coefficients or by partially decoding a stream previously compressed in one of the compression formats.

Referring now to Fig. 4, in the second embodiment, active disk 400 provides output data 460 in one of a plurality of video compression formats. Data 470, which is in a minimal format, *e.g.*, DCT coefficients, is input to active disk 400 as either raw video data on raw video input 480 or as digital video in one of a plurality of digital video formats on input/output data bus 460, processed to obtain the minimal decoding DCT data set (which may include a compression step using a conventional digital compression storage format) and then stored on storage medium 410. The minimal decoding DCT data sets stored on storage medium 40 are thereafter available for selective access by active disk controller 430 for processing and output as selected one of a plurality of output formats, under control of the data location reference 440 and the format identification reference 450. Data location reference 440 is used to select which stored video signal (*i.e.*, minimal decoding DCT data set) is to be processed and output (*i.e.*, which stored video program is selected for viewing), while format identification reference 450 is used to select the particular digital video compression format (*e.g.*, DV or MPEG-2) for the output signal.

The structure of the stored DCT coefficients 470 and any associated data, if any, stored on storage medium 410 are chosen to minimize the time and effort necessary for active disk controller 430 to perform the output processing. As an example, the scale factors and the quantization table indices for each format could be saved as associated data so that they need not be recalculated. Although the storage space within storage medium 410 required to store DCT coefficients and parameters 470 may exceed the storage space required for a given video stream in fully compressed digital storage format, it is unlikely that the total space required would exceed the space required for storing multiple compressed versions (*e.g.*, both MPEG and DV). In addition, as the number of digital video compression formats supported by the method of the present invention increases, the minimal increase in storage space required for DCT coefficients and parameters 470 becomes less significant in view of the space that would be required to store each additional format.

In a third embodiment, active disk 400 of Fig. 4 supplies output video signals in either the DV video compression format or the MPEG-2 video compression format. Details of the DV video compression format may be found in a proposed SMPTE Standard entitled "Data Structure for DV Based Audio, Data and Compressed Video, 25Mb/s and 50Mb/s," 4th draft (hereinafter "the DV Standard"). Details on the MPEG-2 video compression format can be found in an ISO Standard entitled "ISO/IEC 13818-2 Information Technology-Generic Coding of Moving Pictures and Associated Audio Information: Video" (hereinafter "the MPEG-2 Standard").

Certain terminology is used herein for convenience only and is not to be taken as a limitation on the present invention. The terms "intra-coded" and "intra-frame coded" are defined as referring to a coding scheme that does not employ temporal prediction in encoding a signal (i.e., all of the video fames are compressed independently of each other).

The DV and MPEG-2 video compression formats both use DCT coefficients as a basis for compression. The generation of the DCT coefficients from raw video data is the same in both schemes. Only the so-called 4:2:2 sampling structure defined in the ITU-R Rec. 601 Standard will be described here, although, as one of skill in the art will readily recognize, other sampling structures may be similarly used. Also, for the purposes of this discussion, it is assumed that the MPEG-2 stream consists of intra-frame compressed data only (4:2:2@Main, I Frame only), although, as one skilled in the art will readily recognize, this method may be easily expanded to cover corresponding additional aspects of MPEG-2. When a video signal is received that is to be compressed (in either MPEG or DV formats), the portion of the video signal containing the image is sampled and digitized to produce raw video data. Each digitized video sample consists of a pixel represented by three 8-bit values, one for luminance (Y), and one for each of the color difference values (Cr and Cb). The sampling structure in this example is that typically used in the 4:2:2 ITU-R Rec. 601 Standard and produces a 720 pixel by 480 line frame of video data for each frame in the video signal. Every other horizontal Cr and Cb sample is discarded. The resulting pixel data is then partitioned into three 8x8 pixel "blocks" starting in the upper left corner of the visible part of a frame, one block consisting of just Y pixel data, one block consisting of just Cr data and one block consisting of just Cb data. This results in a 90 block by 60 block array of Y data and a 45 block by 60 block array for each of the Cr and Cb data. Normally, a two-dimensional discrete cosine transform is performed on each 8x8 block thereby generating 64 coefficients, with the Y, Cr and Cb blocks each processed independently. These coefficients are traditionally arranged in a "DCT block" with the zero-order coefficient in the upper left corner and the (8,8)-order coefficient in the lower left corner. Two Y DCT blocks and one each of the corresponding Cr and Cb DCT blocks are grouped into macroblocks. These DCT coefficients are the simplest common data structure to use in a simple transcoder but the processing necessary to process the DCT coefficients into either the DV or MPEG-2 video compression formats is still quite significant. At this point, the DCT coefficients constitute a minimal decoding DCT data set which is stored on storage medium 410 as video data 470

Processing of video signals into either the DV or MPEG-2 video compression formats diverges significantly here. For example, the DV format uses either the 8x8 transform described above or a so-called "2-4-8 transform", depending on the differences between the two interlaced fields in the frame (note that in a progressive scan, a frame consists of a single field, whereas in an interlaced scan, a frame consists of two fields), for any given macroblock. A conventional transform is used to convert 8-8 transforms to 2-4-8 transforms and back again. MPEG-2 and DV processing quantizes the DCT coefficients in different ways. Predefined tables are used to translate the DCT coefficients to their quantized values. The choice of table depends on which format is to be produced and, in the case of DV, how much space a given group of quantized DCT blocks occupies. Further, MPEG-2 and DV use different methods to reduce the number of bits to store/transmit and arrange the DCT coefficient data in the bit stream in different ways. While both encodings quantize the DCT data to take advantage of certain characteristics of human visual perception, the actual quantization levels and parameters differ. It is also possible to reduce the processing required in process the DCT coefficients by taking advantage of other common data configurations. For example, a few simple tables can be used to translate quantization-values or weighting values. Also, the DCT macroblocks can be arranged in a more convenient order to reduce the memory requirements of the active disk controller.

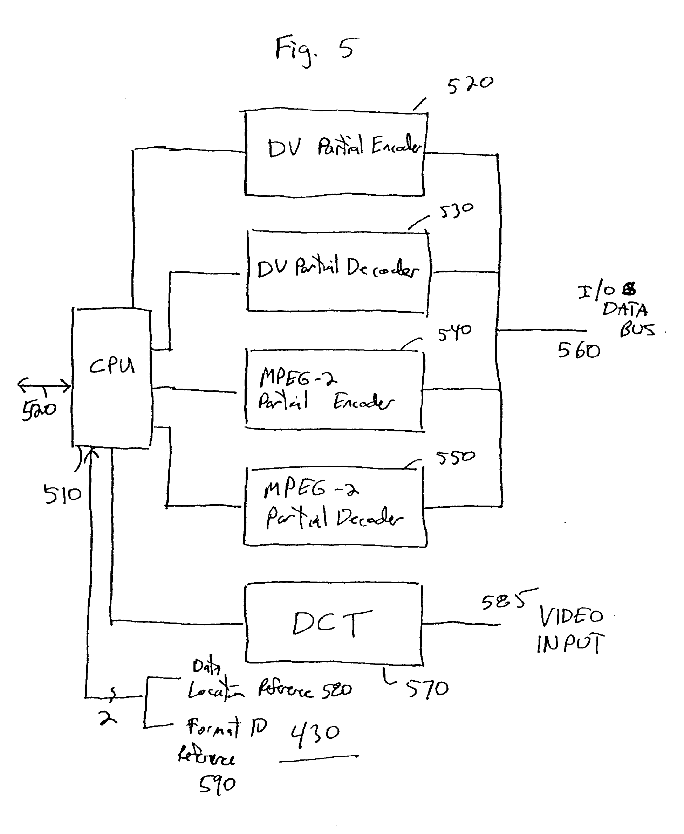

Fig. 5 illustrates a general block diagram of the active disk controller 430 of Fig. 4 in accordance with the third embodiment of the present invention. The active disk controller 430 includes a CPU 510 logically connected to a DV partial decoder module 520, a DV partial encoder module 530, an MPEG partial decoder module 540, an MPEG-2 partial encoder module 550 and a DCT module 570. The two partial decoder modules 530 and 550 takes frames of DV data and MPEG-2 data, respectively, as input data from I/O data bus 560 and produces raw DCT coefficients as output data for storage by CPU 510 on a storage medium connected to bus 520. Encoder module 540 re-quantizes raw DCT coefficients stored on the storage medium 410 (Fig. 4) to MPEG-2 DCT coefficients and encodes the DCT coefficients as MPEG-2 data for output on I/O data bus 560, while encoder module 520 simply encodes the raw DCT coefficients stored on the storage medium 410 as DV data for output on I/O data bus 560. DCT module 570 receives raw video data and produces raw DCT coefficients for storage on storage medium 410 by performing the DCT operation. As discussed above, active disk controller 430 operates under the control of data location reference 580, format ID reference 590 and other conventional control signals. While the active disk controller 430 is described herein as software based, as one of ordinary skill will readily recognize, hardware adaptation of the same is also possible.

Intra-coded DV is a digital video recording standard mainly designed for field news acquisition and postproduction for television broadcast. MPEG-2 is a very flexible and "generic" video format that is designed for distributing compressed video data to consumers. To ensure that the implementation is efficient and that the editing features are supported, the third embodiment of the present invention preferably uses only I-frame based coding in the MPEG-2 format.

Three different chrominance formats are supported by MPEG-2, the 4:2:0, 4:2:2 and 4:4:4 formats. The most commonly used MPEG-2 format is called Main Profile@Main Level, which is targeted for video in the CCIR-601 resolution, in the 4:2:0 format. To meet the needs of the professional studio and post-production environment with interoperability, however, a new profile --- 4:2:2 Profile@Main Level --- has been defined. Unlike other profiles defined in MPEG, this format is a non-scalable profile and does not have a hierarchical relationship with other profiles. The 4:2:2 Profile@Main level professional extension is used in the third embodiment of the invention to match the chrominance format and bit-rate of signals encoded according to the DV standard.

A macroblock in MPEG-2 consists of 4 Y-blocks and 2 Cb and 2 Cr blocks. The MPEG-2 standard was developed primarily for dealing with interlaced video. The pixels in pictures of interlaced video are sampled at alternate vertical positions in the image plane. The purpose of interlaced video is to trade-off vertical resolution for increased temporal resolution under a given total data rate constraint. As a result, both spatial and temporal correlation between the pixels in adjacent lines of interlaced frames is reduced, which causes a decrease in coding efficiency.

Without special treatment for interlaced video, two adjacent fields can be combined into one frame picture and coded as a progressive frame. Alternatively, one each of the two field pictures may be encoded as if it were a progressive frame. Special coding modes are designed in MPEG-2 to improve the coding efficiency for interlaced video. These include Field Prediction, Field DCT and Alternate Scan (a modification of the zigzag scan order). The active disk 400 of the third embodiment of the present invention does not take advantage of these options. That is, the exemplary active disk 400 of the third embodiment only implements frame-mode operations in MPEG-2 in encoding the minimal decoding DCT data set into an MPEG-2 video signal. Conversely, when encoding the minimal decoding DCT data set into a DV video signal, the exemplary active disk 400 of the third embodiment processes only frame-mode encoded MPEG-2 images. Thus, DV partial decoder module 520 translates any 248 DCT blocks into corresponding 88 DCT blocks, and likewise DV partial encoder module 530 examines each 88 DCT block provided by the partial MPEG-2 decoder and translates appropriate blocks to 248 DCT blocks for the DV signal.

As described above, quantization process in MPEG-2 differs considerably from the DV standard. Under the MPEG-2 standard, the quantization steps for all DCT coefficients constitute an 88 matrix denoted as quantization step matrix. It is computed according to Equation (1) as follows:

$$QS = QWxQ\_Scale / 16 \tag{1}$$

where QS=Quantization Step Matrix (8x8); QW=Quantization Weighting Matrix(8x8) and Q_Scale=Quantization Scale (an integer). QW can change on a picture-by-picture basis while Q_Scale can change on a macroblock-by-macroblock basis. As set forth above, QW is changed to take advantage of the frame content while Q_Scale is changed dynamically to increase or reduce the data rate of the compressed video signal. In 4:2:2 or 4:4:4 video streams, the QWs for luminance and chrominance blocks are different.

In addition to differences in the quantization methods, DV differs from MPEG-2 in other ways:

(1) In DV, for each DCT block, a fixed number of bytes are assigned to the DCT encoded data. One macroblock consists of 4 DCT blocks, two luminance component blocks and two chrominance component blocks (one Cr and one Cb). A fixed number of bytes are also assigned to each macroblock (slightly more than the sum of the bytes assigned to its individual four DCT blocks). Every five macroblocks selected according to the predefined shuffling algorithm constitute a video segment, and a fixed number of bytes are assigned to each segment. If some DCT blocks need more storage space than that assigned to them, there are two steps to distribute "overflow" data bits:

(a) Concatenate the overflowed bits of the DCT blocks within the same macroblock and distribute the bits to the unused space of the other DCT blocks in the same macroblock;
(b) If, after step (a), there are still overflow bits for some macroblocks in a segment, then concatenate those overflow bits and distribute them to unused space of the DCT blocks in the same segment.

Because a fixed number of bytes is assigned to each block, the DC coefficient and the lower-spatial frequency coefficients are always stored in the area allocated to the block. Only the highest spatial frequency components are concatenated into the overflow data. Consequently, if an image is decoded without recovering the overflow data, only information related to these coefficients is lost. This scheme minimizes apparent distortion because the human eye is less sensitive to errors in the high spatial frequency components than to errors in the DC component or in the lower spatial frequency components.

Because the overflow data stays within the segment, each segment is completely independent from other segments. From the description above it follows that during the encoding of a DCT block and a macroblock, the unused bits should be preserved for future use by other DCT blocks in the same macroblock or the same segment. Note that MPEG-2 needs no such facility for 'overflow', because, it does not have fixed size frames. Each MPEG-2 DCT block can be as big or small as necessary. This is also a tradeoff between compression efficiency and the convenience of fixed size frames.

(2) As described above, DV adopts a DCT mode called 248 DCT to encode frames that exhibit intra-frame motion. MPEG-2 also supports a frame DCT and a field DCT mode. For simplicity, however, the active disk 400 of the third embodiment of the present invention does not use the field DCT mode of MPEG-2. In the active disk 400 of the third embodiment of the present invention, all MPEG-2 DCT blocks use the 88 DCT mode. Therefore, a conversion to the 88 DCT mode is performed in the exemplary embodiment of the invention when a 248-DCT block is encountered in the DV bit-stream. The process for converting from 248 DCT blocks to 88 DCT blocks is described below.

(3) Even for the 88 DCT mode in DV, which has exactly the same coefficient order as the frame DCT in MPEG-2, it is not possible to directly use the quantized DCT coefficients in the DV, due to the difference in the quantization processes between the two standards. The MPEG-2 quantization-weighting matrix is chosen on a picture-by-picture basis and a quantization scale is chosen on a macroblock-by-macroblock basis. The DV quantization method, described above is more complex. Accordingly, it is impossible to simply choose an appropriate MPEG-2 weighting matrix that would allow the direct reuse of the quantized DV DCT coefficients by simply adjusting the weighting scale for each macroblock. Even if the weighting matrices in DV did have a simple scaling relationship with that in MPEG-2, it would still not be possible to reuse the DV coefficients directly in MPEG-2. The weighting scale in MPEG-2 is chosen at the level of one macroblock (8 DCT blocks) whereas the corresponding quantization decisions (class number and quantization table number) are made at the level of each DCT block in DV. Accordingly, in the third embodiment of the present invention, the DCT coefficients are requantized.

Complete dequantization and requantization is not necessary, however. If an MPEG-2 weighting matrix is specified to match the 88 area numbers with quantization steps taken from the first row of the DV quantization table, then the DCT coefficients can be reused simply by doing some bit shifting on the original quantized DV DCT coefficients. This is possible because the quantization steps in DV are always powers of 2 times the finest quantization steps. In addition, because both MPEG-2 and DV use the same zigzag scan order for 88 DCT and because MPEG-2 and DV both use run-length coding, the run-lengths can be reused. In those cases when a quantization step size other than the finest step size for DV is used within the MPEG stream, some non-zero DCT coefficients of DV may become zero in MPEG. In this instance, some extra processing may be used to combine two or more run-lengths into one.

In operation, the active disk 400 operating according to the third embodiment receives video data in one of three formats, *i.e*., MPEG-2, DV or raw video. The MPEG-2 and DV input video data is received on input/output data bus 460, while the raw video is received on video input 480. Active disk controller 430 processes the received input video signal in a conventional manner to produce DCT coefficients comprising the minimal decoding DCT data set for storage as video data 470 on storage medium 410. As one of ordinary skill will readily recognize, the processing performed by active disk controller 430 depends on the format of the input video signal. If the input video signal constitutes raw video data, then active disk controller 430 samples the input video data to produce DCT coefficients, as discussed in detail above. If the input video signal is digitized in either the DV or MPEG-2 video formats, then the input video signal is partially decoded to obtain the DCT coefficients.

In the third embodiment, once a video signal representing a video program is stored on storage medium 410 in minimal decoding DCT data set format, it is available for output in either of the DV or MPEG-2 video formats. A request for output of a stored video program is received on data location reference control line 440, and the format in which that stored video program is to be output is received on format identification reference control line 450. Upon receipt of such a request, active disk controller 430 signals storage medium to transmit the stored video program, and active disk controller 430 encodes the stored video program from the minimal decoding DCT data set format to the requested output digital video format (*i.e*., either DV or MPEG-2).

Referring back to Fig. 5, DV partial decoder module 520 decodes the (run-length, quantized-DCT) combinations in DV to obtain at least partially dequantized, run-length coded coefficients MPEG-2 partial encoder 540 requantizes the dequantized-DCT coefficients, formats the DCT coefficients into sequences of image frames, and encodes the re-quantized-DCT coefficients with the MPEG-2 VLC table into an MPEG-2 bit-stream.

The run-length computation in MPEG-2 can be omitted, at least for 88 DV blocks, by reusing the run-length values from the DV blocks. As described below, these values can be reused if the MPEG quantization matrix is defined to correspond to the first row of the DV quantization table. With an MPEG-2 weighting matrix corresponding to the coarser quantization steps in DV and some minor modifications on the process described above, the bit-rate and quality of the output MPEG-2 stream can be adjusted. In the third embodiment of the present invention, partial dequantization and requantization is used only when converting 88 format blocks. As described below, 248 DCT blocks are fully dequantized and requantized as a part of the partial encoding process performed by MPEG-2 partial encoder 540.

Based on the discussion above, two algorithmic simplifications are incorporated in the active disk controller 430 of the third embodiment of the present invention. First, due to the essential equivalence between the DCTs in the two standards, the step of doing an inverse DCT (IDCT) is avoided. In other words, the DCT coefficients may be reused without converting data to the pixel level. This eliminates the computation intensive steps of doing an IDCT and then a second DCT. As the DCT with rounding is one source of losses in the encoding process, the method of the third embodiment of the present invention is less lossy than a process that fully . decodes the DV data into pixels and then encodes the pixels as MPEG-2 images, which would be required if data were stored in raw format. Second, as noted above, inverse quantization and re-quantization are not always necessary. For 88 DCT blocks, the quantized DCT coefficients may be used directly.

In operation, DV partial decoder 530 first extracts the compressed DCT blocks from the DV segments, and then the DCT coefficients are variable-length decoded and dequantized. MPEG-2 partial encoder 540 converts any 248 DCT blocks into 88 DCT blocks, and regroups the decoded and dequantized DV DCT blocks into DCT blocks and macroblocks for the MPEG signal. Next, MPEG-2 partial encoder 540 quantizes the regrouped coefficients and then variable-length codes the quantized coefficients to produce the output bit-stream in MPEG-2. The data rate of the MPEG bitstream (VBV buffer occupancy) is monitored to generate a data rate control signal, which is used to control the MPEG quantization scale factor that is used for respective macroblocks of the MPEG signal.

The smallest unit where there is a logical correspondence between the DV and MPEG data is one frame. In DV each frame is encoded independently of others. Only the I-frame mode in the MPEG-2 format, is used to simplify implementation and to retain the editing capabilities of DV.

In further detail, partial decoding of the DV signal by DV partial decoder 530 includes: (1) collecting overflow data; (2) VLC decoding of the DV stream; and (3) converting 248 DCT blocks in DV into 88 DCT blocks.

In this DV partial decoding operation, instead of reconstructing the pixels of the video frame, corresponding DCT coefficients are extracted and VLC run lengths are extracted.

In the MPEG-2 partial encoding operation performed by MPEG-2 partial encoder 540, the extracted DCT coefficients are re-encoded into the MPEG-2 format described in greater detail below.

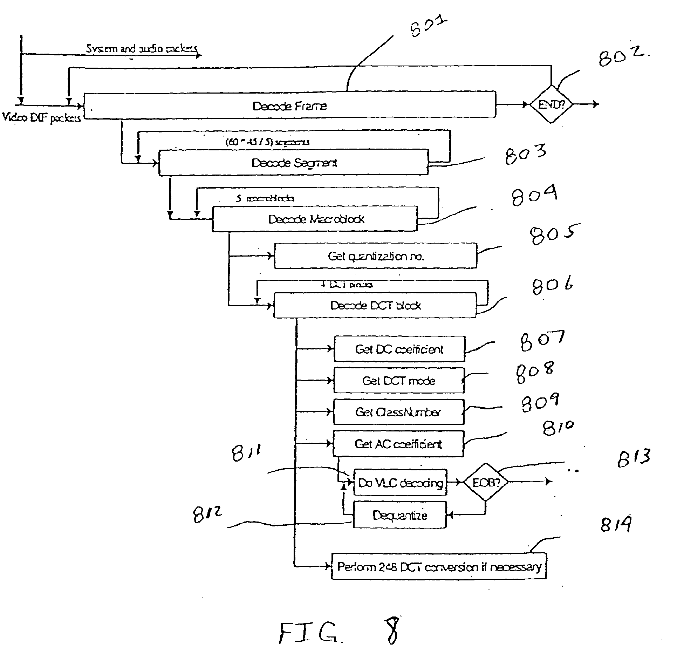

In Fig. 8, the DV partial decoding process is shown more specifically as a hierarchical flow diagram. In a flow diagram of this type, some blocks are indented with respect to other blocks. The top-most block represents the entire operation. Sub-blocks that are indented from this block represent steps that are performed to complete the operation. Each of these sub-blocks, in turn may have further indented sub-blocks representing steps that are performed to complete the sub-block operation.

At step 801 of the hierarchical flow diagram shown in Fig. 8, a series of video frames, encoded as DIF packets, is received and separated into segments and decoded. Step 801 repeats for each video frame until the end of the video sequence is detected at step 802. The segments, in turn, are decoded at step 803. Each segment includes five macroblocks. Accordingly, at step 804, the individual macroblocks of the segments are decoded. At this step, any overflow bits that are distributed among the blocks of the macroblock and among the macroblocks of the segment are retrieved and stored separately. At step 805, macroblock decoding process determines the quantization step sizes that are used for each block. In step 806-813, the individual blocks of DCT coefficients are processed. At steps 806-810 the variable-length DCT coefficients are extracted from the blocks and the DCT mode of the block, 88 of 248, is identified. Also at steps 806-810, the overflow bits are processed to recover the corresponding coefficient values and these values are restored to their respective blocks. At steps 811, 812 and 813, the extracted coefficients are variable-length decoded and at least partially dequantized, as described above. If a block is in 248 mode then, at step 814, it is converted to an 88 block, as described below in section III. When a block is converted from a 248 mode block to an 88 mode block, the 248 block is fully dequantized. The result of the process shown in Fig. 8 is a stream of DCT coefficients that are at least partially dequantized. These coefficients, however, if they are derived from 88 DV blocks, are still run-length coded and in the zigzag scan order used for the 88 block format.

As described above, coefficients in 248 DV blocks are fully dequantized during the decoding process. Coefficients in 88 format DV blocks may also be fully dequantized. In either of these operations the DV coefficients are fully dequantized using an approximation of the dequantization operation. Essentially, the quantization process involves multiplying each DCT coefficient by a (floating point) weighting factor, and then scaling it by the corresponding quantization-step. Because all the quantization steps are powers of 2, the division can be simply carried out by means of bit shifting. A rounding process is incorporated to achieve smaller quantization errors. The processes of quantizing with rounding and dequantizing are shown in Equations (2) and (3), respectively:

$$QDCT = (DCTCoeff * WFactor + sign(DCTCoeff) * Quanstep) / Quanstep \qquad (2)$$

where Sign(x) = {1 if x>0; 0 if x=0; -1 if x<0}

$$DCTCoeff = QDCT / WFactor * Quanstep \qquad (3)$$

where QDCT is the quantized DCT coefficient, Wfactor is the weighting factor and Quanstep is the quantization step.

Thus a floating-point division operation is performed as part of the dequantization operation. The implementation of the third embodiment of the present invention approximates the operations of Equations (2) and (3) by Equation (4):

$$DCTCoeff = ((QDCT * IntFactor) * Quanstep) >> 15 \qquad (4)$$

where IntFactor = 32768/WFactor and ">>15" means to shift to less significant bit positions by 15 bits.

Although this third embodiment of the present invention fully de-quantizes the coefficients using an approximation to the full dequantization algorithm, it is contemplated that the coefficients may be only partially dequantized as described above.

Preferably, a simple, optimal procedure to implement the VLC decoding is provided in step 811. Ideally this would achieve the VLC lookup in as little as 2 CPU cycles. A pre-stored lookup table is used to achieve a tradeoff between memory and efficiency. Since the length of the VLC code-word is not known in advance but only that it has a maximum length of 16 bits, the lookup table returns the correct code-word for any arbitrary input stream; in this third embodiment of the present invention, a table of size 216 is used. Using this table, the VLC decoding becomes a simple table lookup operation, which may be simplified further using a native hardware implementation on PENTIUM® CPUs manufactured by Intel Corporation.

The DV partial decoder 520 described above processes the overflow bits both from the segments and from the individual macroblocks. It is contemplated, however, that to control the bit-rate of the encoded MPEG-2 signal, the partial decoding process may ignore the overflow bits that are associated with the segments or with both the segments and the macroblocks. In ignoring the overflow bits, the presently preferred process selectively sets the coefficient values corresponding to the overflow bits to zero. In order to understand how the overflow bits are processed during conversion, it is helpful to understand how the overflow bits are generated during the initial DV encoding operation. The method of distributing the overflow blocks among the macroblocks and among the segments is described below.

There are three levels of bit rate distribution in a DV segment: (1) the bits for each DCT block are distributed into the assigned space for the block (1st level); (2) the overflow bits of the DCT blocks are concatenated within the same macroblock and distributed to the unused space of the other DCT blocks of the macroblock (2nd level); and (3) if after the second level there are still overflow bits for some macroblocks in a segment, then these bits are concatenated and distributed to unused space of the DCT blocks of the same segment (3rd level).

Because the blocks are run-length coded and variable length coded in DV format, each coefficient in each block is specified. The blocks of the segment are encoded in a predetermined order, storing the coefficients that do not fit into the data space allocated for a particular block into a list. If, after encoding a macroblock, coefficients for that macroblock are in the overflow list, the DV encoding method first tries to place these coefficients into available space in any of the blocks of the same macroblock in a predetermined order. If space can not be found, these coefficients are then stored in the overflow list for the segment. After the segment has been encoded, these coefficients are stored into available locations in the remaining macroblocks in a predetermined order.

The overflow bits can be recovered by reversing the process. As each block is decoded, any extra data in the block is identified as overflow data. When a decoded block does not include all of its coefficients, the process first looks to extra data in the same macroblock to recover the coefficients. Any overflow data remaining after the macroblock has been completely decoded is segment overflow data. Once all of the macroblocks in the segment have been processed in this manner, the process then decodes the remaining missing coefficients from the segment overflow data. Three options are available, corresponding to the three levels of handling overflow bits:

1. Decode only the bits in the assigned space for each DCT block. This method produces the lowest bit rate and the lowest data quality;
2. In addition to 1, decode the overflow bits within each macroblock, namely the bits distributed in the 2nd level, which will yield a higher data quality and bit-rate in the MPEG steam; and
3. Decode all the DV bits in the blocks and all of the overflow bits, which produces the highest quality and highest bit rate.

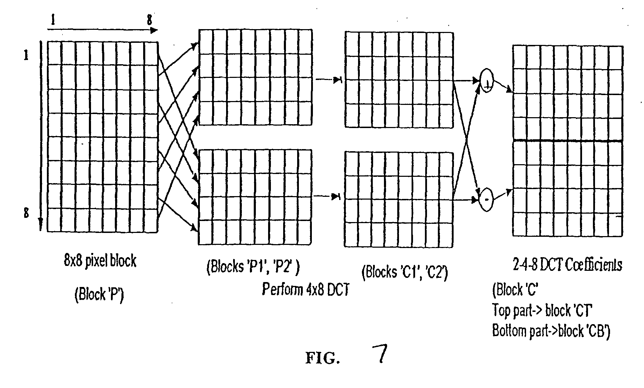

Fig. 7 illustrates the relationship between a block of pixels (Block 'P') and to a block (Block 'C') of 248-DCT coefficients. Alternate rows of pixels are regrouped into two sub-blocks, P1 and P2. the blocks P1 and P2 are subject to a 4x8 DCT to provide blocks of coefficients, C1 and C2. These two blocks are then recombined to give the final block of 248-DCT coefficients. Mathematically, the operation of converting from a block of 248 format DCT coefficients to a block of 88 DCT coefficients is derived as follows:

1. Obtain C1 and C2 from block C using Equations (5a) and (5b):

$$C_1 = \frac{C_T + C_B}{2a} + H \tag{5a}$$

$$C_2 = \frac{C_T - C_B}{2a} + H \tag{5b}$$

where $a = (1024/(2*724))$ is a scaling factor and H is a constant matrix, which compensates for the fixed DC offset, $C_T$ is the matrix of coefficients from the top part of the block and $C_B$ is the matrix of coefficients from the bottom part of the block.

2. Compute $P_1$ and $P_2$ by doing an inverse 4x8 DCT according to Equation (6):

$$P_1 = T_4{}^T C_1 T_8; P_2 = T_4{}^T C_2 T_8 \tag{6}$$

where $T_4$ and $T_8$ are the 4-point and 8-point DCT transformation matrices respectively.

3. Compute P, by shuffling the rows of $P_1$ and $P_2$ according to Equation (7):

$$P = A_1 P_1 + A_2 P_2 \qquad (7)$$

where A1 and A2 are the matrices that represent a shuffling operation, for example:

$$A_1 = \begin{bmatrix} 1 & 0 & 0 & 0 \\ 0 & 0 & 0 & 0 \\ 0 & 1 & 0 & 0 \\ 0 & 0 & 0 & 0 \\ 0 & 0 & 1 & 0 \\ 0 & 0 & 0 & 0 \\ 0 & 0 & 0 & 1 \\ 0 & 0 & 0 & 0 \end{bmatrix} \qquad A_2 = \begin{bmatrix} 0 & 0 & 0 & 0 \\ 1 & 0 & 0 & 0 \\ 0 & 0 & 0 & 0 \\ 0 & 1 & 0 & 0 \\ 0 & 0 & 0 & 0 \\ 0 & 0 & 1 & 0 \\ 0 & 0 & 0 & 0 \\ 0 & 0 & 0 & 1 \end{bmatrix}$$

4. Finally, perform regular DCT on the pixel block P to get the 88-DCT block, CT according to Equation (8):

$$C^T = T_8 P T_8^{\ T} \qquad (8)$$

The following summarizes the above steps:

$$C^T = T_8 P T_8^T$$

$$= T_8 (A_1 P_1 + A_2 P_2) T_8^T$$

$$= T_8 (A_1 T_4^T C_1 T_8 + A_2 T_4^T C_2 T_8) T_8^T \qquad (9)$$

$$= \left( \frac{F_1 + F_2}{2a} \right) C_T + \left( \frac{F_1 - F_2}{2a} \right) C_B + (F_1 + F_2) H$$

$$C^T = FC + K$$

where:

$$F_1 = T_8 A_1 T_4^{\ T}$$

$$F_2 = T_8 A_2 T_4{}^T$$

$$F = \left( \frac{F_1 + F_2}{2a} \quad \frac{F_1 - F_2}{2a} \right)$$

$$C = \begin{pmatrix} C_T \\ C_B \end{pmatrix}$$

$$K = (F_1 + F_2)H$$

In the last step above in Equations (9), $C_T$ and $C_B$ are combined into a single matrix C; F and K are constant matrices derived from $F_1$, $F_2$ and H as shown. As shown in Equation (9), this operation of converting from a block of coefficients $C_{248}$ in 248 format to a block of coefficients $C_{88}$ in 88 format can be mathematically reduced to Equation (10):

$$C_{88} = FC_{248} + K \tag{10}$$

First, the matrix F is pre-computed and then approximated by an integer array to an accuracy of about 4 decimal digits. This matrix is very sparse, i.e., only a small fraction of its coefficients are non-zero. Also, the matrix K has only the DC coefficient non-zero. Therefore, the operations described by Equation (9) can be reduced to a hard-coded multiplication by the non-zero coefficients of the F matrix and addition of the DC coefficient of the K matrix.

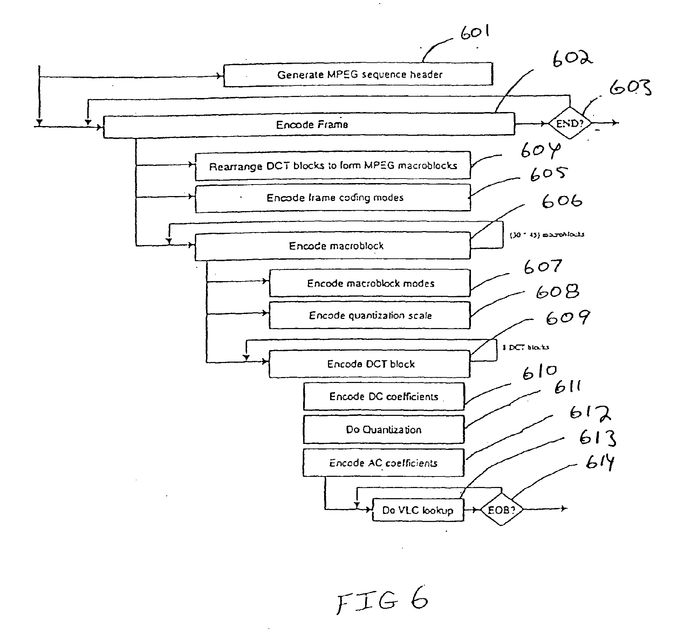

Referring now to Fig. 6, the processing required to encode the minimal decoding DCT data set into MPEG-2 is shown more specifically as a hierarchical flow diagram of the processing performed by MPEG-2 partial encoder module 540. This module produces an MPEG-2 video stream from a block of dequantized (or at least partially dequantized) DCT coefficients, stored as a minimal decoding DCT data set.

In step 601 the data stream is identified with an MPEG-2 sequence header and then, at step 602, each image frame is identified by an MPEG picture header. The process of encoding a video frame includes steps 602-614, as described below. The encoding of video frames continues until, at step 603, no more video frames are to be encoded.

In step 604 the DCT blocks that are within the minimal decoding DCT data set are arranged to form slices of MPEG macroblocks, each with a slice header. In the exemplary embodiment, all frames are encoded as MPEG-2 intra-frame coded data (I-frames). Accordingly, at step 605, the frame is marked as being an I frame. In steps 606-614, the individual macroblocks are encoded using the blocks within the minimal decoding DCT data set. In steps 607 and 608, the macroblock header is inserted into the bit stream including a first data value indicating that the macroblock is a frame encoded 4:2:2 macroblock and a second data value indicating an appropriate quantization scale value for the macroblock.

At steps 609-614, the DV blocks are encoded and requantized. At step 610, the DC coefficient is encoded. At step 611, the AC coefficients are quantized according to the quantization table and at steps 612-614 the AC coefficients are variable-length coded. The encoding of an individual block continues until, at step 614, 64 coefficients have been encoded. When this occurs, control transfers to step 609 to encode the next block. When eight blocks have been encoded at step 609, control transfers to step 606 to encode the next macroblock. When a number of macroblocks corresponding to image pixels that extend across the video frame (a slice) have been encoded, control transfers to step 604 to encode the next slice.

In step 612 the DCT coefficients within the minimal decoding DCT data set are requantized as DCT coefficients according to the MPEG-2 standard.

At step 611, the fully dequantized coefficients (rawCoeff) are quantized in accordance with the MPEG standard into quantized coefficients (QuanDCT) using the MPEG quantization matrix (Qmatrix) and quantization scale values (Qscale) as defined by Equation (11):

$$Qstep = Qmatrix[i][j]xQscale$$

$$QuantDCT = (16 * rawCoeff + Sign(rawCoeff) * Qstep / 2) / Qstep \qquad (11)$$

As set forth above, rather than fully dequantizing the DV coefficients and then requantizing the MPEG-2 coefficients, the quantized DV coefficients for blocks that were originally in 88 format may be converted into quantized MPEG-2 coefficients by a simple bit-shifting operation according to one aspect of the third embodiment of the present invention. In this conversion process, the MPEG-2 weighting matrix is selected to correspond to the 88 DCT block number matrix with the quantization steps determined from the first row of the DV quantization table (i.e. the finest step size). The quantized DV coefficients may be converted to quantized MPEG-2 coefficients by a simple bit-shift operation on each coefficient. This is possible because the quantization steps in the DV standard are always a power of two times the finest quantization steps.

As one of ordinary skill will readily recognize, the processing performed by DV partial encoder module 520 and MPEG-2 partial decoder module 550 follows from symmetry from the operations of MPEG-2 partial encoder module 540 and DV partial decoder module 530, respectively. In the third embodiment of the invention, the input MPEG-2 data is preferably limited to be intra-frame (I-Frame) coded and having a 4:2:2 chrominance format, however, as one of ordinary skill will readily recognize, the methods presented herein may be readily extended to cover additional coding possibilities for input MPEG-2 data. In brief, MPEG-2 partial decoder module 550 takes I-frames of MPEG-2 data as input and produces raw DCT coefficients that may be stored on the storage medium, or re-quantized as DV DCT coefficients, depending on which format is selected to be the minimal decoding DCT data set. Thereafter, DV partial encoder module 520 re-quantizes the MPEG-2 DCT coefficients, if not already performed, to DV DCT coefficients and then encodes the coefficients as a DV output signal.

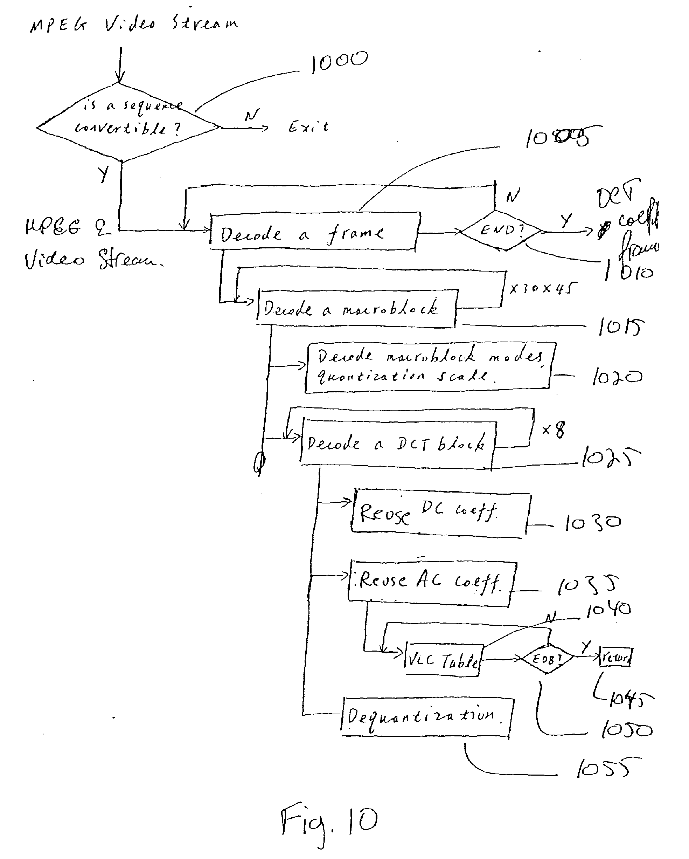

Referring now to Fig. 10, the partial MPEG-2 decoding performed by MPEG-2 partial decoder 550 is shown more specifically as a hierarchical flow diagram.
Instead of reconstructing the pixels of the video frame, corresponding DCT blocks are extracted and each macroblock of the slice is decoded to extract DCT blocks. The coefficients are then processed through a variable length decoder. Next, the quantization step size used for each of the DCT blocks is determined and the coefficients are dequantized. Finally, as an optional step, depending on the format chosen for storing the DCT coefficients on the storage medium, the blocks of MPEG DCT coefficients may be converted into blocks of DV coefficients. In particular, the partial MPEG-2 decoding performed by MPEG-2 partial decoder module 550 includes (1) VLC decoding of the MPEG-2 data stream; (2) Dequantization of the DCT coefficients; and optionally, (3) Converting MPEG macroblocks into DV macroblocks. The conversion step 3 is optional because it may also be performed by the DV partial encoder module 520.

As shown in particular detail in Fig. 10, the received MPEG sequence is first examined at step 1000 to make sure it is 4:2:2 Profile@Main Level, which is convertible to DV. If it does meet that version, each frame of the MPEG sequence is partially decoded one by one at step 1005 to produce as output the DCT coefficients until there are no more frames left (step 1010). The frame decoding step 1005 consists of decoding each macroblock within a frame (step 1015). To decode each macroblock (step 1015), the macroblock coding decision information such as macroblock modes and quantization scale (step 1020) and the actual DCT blocks (step 1025) are decoded. Decoding each DCT block (step 1025) consists of restoring the quantized DC coefficients (step 1030) and quantized AC coefficients (step 1035) and dequantization (step 1055). In the process of restoring the AC coefficients (step 1035), a VLC look-up table step 1040 is performed repeatedly until an EOB (End of Block) symbol is encountered (steps 1050 and 1045).

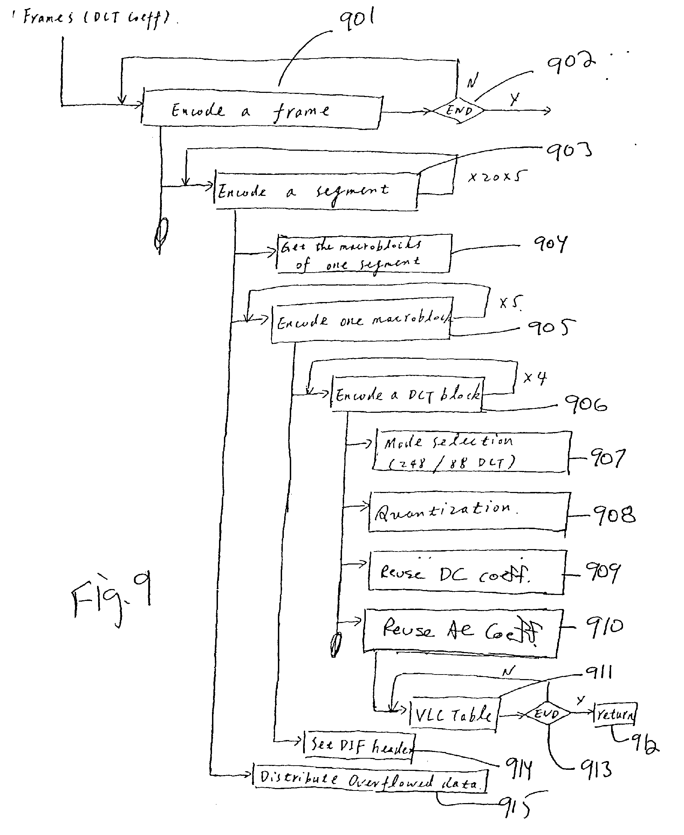

Referring now to Fig. 9, the partial DV encoding performed by DV partial encoder module 520 is shown more specifically as a hierarchical flow diagram. The blocks of MPEG-2 DCT coefficients are optionally converted into blocks of DV coefficients, if not previously performed by MPEG-2 partial decoder module 550. The converted blocks are then regrouped into DV macroblocks, quantized and finally variable-length coded to produce the DV-encoded output signal.

As shown in particular detail in Fig. 9, DCT coefficients are encoded into DV format frame by frame (step 901) until there are no more frames remaining to be encoded (step 902). The step 901 of encoding a frame is broken down into encoding a number of segments (step 903). The segment encoding step 903 can be further broken down into the steps of obtaining the shuffled macroblock data for the segment (step 904), encoding the five macroblocks (step 905) in the segment and distributing overflowed bits (step 915). The step 905 of encoding each macroblock consists of the steps of setting the DIF packet header (step 914) and encoding four DCT blocks (step 906). Step 906 further consists of the steps of 248/88 DCT mode selection (step 907), quantization (step 908), reusing quantized DC coefficients (step 909) and reusing quantized AC coefficients (step 910). In the process of performing step 910, a VLC look-up table step 911 is performed repeatedly until the bit budget is exhausted (steps 912 and 913). In the process of performing step 915, bits are distributed according to the DV Standard.

Preferably, the MPEG-2 coefficients are completely dequantized and the blocks of DCT coefficients are then requantized. In addition, because both MPEG-2 and DV video formats use the same zigzag scan order for 88 DCT and the same run-length coding, the run-lengths and the coefficient order can be reused. Further, by using only the I-frame mode in the MPEG-2 format, implementation of the active disk controller is simplified and the editing facilities remain intact.

It is important to note that after dequantizing the MPEG frame-mode DCT blocks, it is desirable to determine whether a particular block should be encoded as a 248 DV block. Preferably, each frame-mode MPEG block is analyzed to determine if it exhibits significant intra-frame motion. Because there are two DCT modes in DV encoding, (i.e., 88 frame mode and 248 field mode) a significant improvement in both temporal and spatial resolution may be achieved by recognizing MPEG blocks that combine two fields which exhibit significant intra-frame motion and encoding those blocks as 248 blocks in the DV signal.

The criteria for determining whether an MPEG-2 block is a candidate for recoding as a DV 248 block is described below. Assume that a pixel DCT block is denoted as P(x,y) (x,y=0,1...7) where x is the vertical position y is the horizontal position. In the pixel domain, the selection of the DCT mode follows from Equation (12):

$$Sum = \sum_{y=0}^{7} abs(\sum_{x=0}^{7} (-1)^x P(x,y)) \qquad (12)$$

If the Sum $\geq$ a predetermined threshold, the 248 DCT mode is selected, otherwise the 88 DCT mode is selected. When only 88 DCT coefficients are decoded from the MPEG data stream, it is undesirable to perform an IDCT to recover the pixels and then perform the process described above just to determine whether the block should be coded as a 248 DCT block. Preferably, this analysis and selection should be performed in the DCT domain. For example, a pixel DCT block Q(x,y) is constructed such that:

Q(x,y) = a when x is even;
    where a = threshold/sum, where the threshold = 600 and a = (600/32)
Q(x,y) = 0 when x is odd;
    Using this DCT block, Sum==the predetermined threshold defined in the pixel domain above. Next the 88 DCT is performed on Q(x,y) to get a DCT coefficient DQ(m,n)(m.n=0,1,...7). Note that only D(2v+1,0) is not zero (v=0,1,2,3) and DQ(7,0) is significantly greater than its counterparts in those 88 DCT blocks with their mode selected in the pixel domain. Thus, it is reasonable to use the absolute value of DQ(7,0) as an index to make the mode selection decision in the DCT domain.

Therefore, if the 88 DCT coefficient block is denoted D(m,n) m,n=0,1...7, the selection process in the DCT domain is:
    If abs(D(7,0)) $\geq$ DQ(7,0), 248 DCT mode is selected (and the 88 to 248 DCT conversion is performed), otherwise the 88 DCT is selected (i.e., D(m,n) remains intact).

Preferably, each decoded MPEG block is examined to determine whether it should be encoded as an 88 or 248 DV block. The method for converting from 88 coefficient blocks to 248 coefficient blocks follows from the process, described above, that is used to convert the 248 blocks to 88 blocks. Equation (13) that describes the conversion of 88 blocks into 248 blocks can be derived from equation (9), as follows:

$$C_{248} = F^{-1} (C_{88} - K) \qquad (13)$$

$$= F^{-1}C_{88} - K_{88}$$

where $K_{88} = F^{-1}K$. The inventors have determined that $FF^T = 1.0002I$ where I is an 8 by 8 identity matrix. Consequently, $F^{-1} \approx F^T$ and the translation from an 88 block to a 248 block may be approximated by Equation (14):

$$C_{248} = F^T C_{88} - F^T K \qquad (14)$$

Thus, the same process that is used to convert the 248 blocks of coefficients into 88 blocks of coefficients may be used to convert 88 blocks of coefficients into 248 blocks of coefficients.

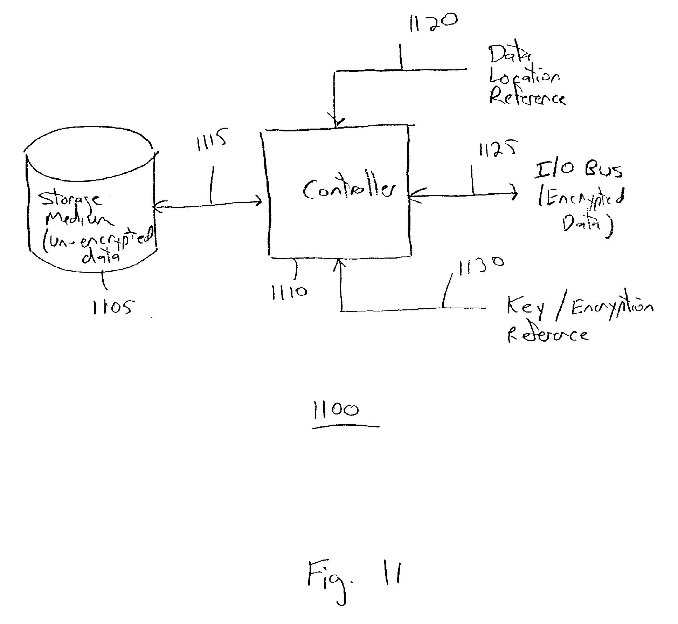

Referring now to Fig. 11, a block diagram of a fourth embodiment of the present invention is shown in which controller 1110 is connected to storage medium 1105 via a bus 1115. Data is stored on storage medium 1105 in an unencrypted format, preferably also in a conventional compressed format. Controller 1110 has two logical inputs, data location reference 1120 and key/encryption reference 1130 as well as conventional control signals and an I/O bus 1125. Data input to controller 1110 includes an associated data location reference which indicates where on the storage medium the data is to be stored, and a key/encryption reference which provides a "key" for decrypting the input data and also indicates the type of encryption used on the data, *e.g.*, DES or RSA. When a request for output of data is received by controller 1110, it must be accompanied by an associated data location reference signal on line 1120, and a key/encrytion reference signal on line 1130. Controller 1110 then retrieves the appropriate data from storage medium 1105 and encrypts the data according to the key/encryption reference signal and thereafter outputs the requested data in encrypted format on I/O bus 1125.

While the present invention has been particularly shown and described with reference to the preferred embodiments and various aspects thereof, it will be appreciated by those of ordinary skill in the art that various changes and modifications may be made without departing from the spirit and scope of the invention. It is intended that the appended claims be interpreted as including the embodiments described herein, the alternatives mentioned above, and all equivalents thereto.

**Claims**

1.    A device for providing digital signals in a selected one of a plurality of digital signal formats, comprising:

    a storage medium for storing predetermined minimal data representing digital signals; and
    a controller for selectively converting said predetermined minimal data into one of said plurality of digital signal formats.

2.    The device of Claim 1, wherein said controller also receives input data in one of said plurality of digital signal formats, converts said input data into minimal storage format and stores said converted data on said storage medium.

3.    The device of Claim 2, wherein said converted data is compressed prior to strorage on said storage medium.

4.    The device of any preceding Claim, wherein said digital signals consist of video signals.

5.    The device of Claim 4, wherein said predetermined minimal data consists of DCT coefficients.

6.    The device of Claim 5, wherein said DCT coefficients are compressed.

7.    The device of Claim 4, wherein said predetermined minimal data consists of DCT coefficients, quantization data table selection data and intra-frame motion data.

8.    The device of Claim 7, wherein said DCT coefficients are compressed.

9.    The device of Claim 4, wherein said plurality of digital video signal formats consists of MPEG and DV digital video formats.

10.    The device of any preceding Claim, wherein said predetermined minimal data consists of un-encrypted data.

11.    The device of Claim 10, wherein said un-encrypted data is compressed.

12.    The device of Claim 10, wherein said digital signals consist of data encrypted in one of a plurality of encryption formats.

13.    The device of Claim 12, wherein said plurality of encryption formats include DES and RSA.

14.    A method for providing digital output signals in a selected one of a plurality of digital signal formats, comprising the steps of:

(1) receiving an input signal,

(2) converting said input signal into a minimal data signal and storing said minimal data signal on a storage medium:

(3) receiving a request from a user to output a stored minimal data signal in one of a plurality of digital signal formats;

(4) retrieving said stored minimal data signal from said storage medium and converting said stored minimal data signal into said requested one of said digital signal formats; and

(5) outputting said converted signal to said user.

**15.** The method of Claim 14, wherein said output digital signals consist of video signals.

**16.** The method of Claim 15, wherein said minimal data signal consists of DCT coefficients.

**17.** The device of Claim 16, wherein said DCT coefficients are compressed prior to storage on said storage medium.

**18.** The method of Claim 15, wherein said minimal data signal consists of DCT coefficients, quantization data table selection data and intra-frame motion data.

**19.** The method of Claim 18, wherein said DCT coefficients are compressed prior to storage on said storage medium.

**20.** The method of Claim 15, wherein said plurality of digital signal formats consists of MPEG and DV digital video formats.

**21.** The method of any of Claims 14 to 20, wherein said predetermined minimal data consists of un-encrypted data.

**22.** The method of Claim 21, wherein said un-encryted data is compressed prior to storage on said storage medium.

**23.** The method of Claim 22, wherein said digital signals consists of data encrypted in one of a plurality of encryption formats.

**24.** The method of Claim 23, wherein said plurality of encryption formats includes DES and RSA.

100

storage
medium

120

Decoder

140

Encode

160

110

130

150

PRIOR
ART

Fig. 1

200

Data location
reference

240

270

storage
medium

Active
Disk
Controller

260 input/
output data bus

220

210

230

250

Format
identification
reference

Fig. 2

Fig. 3

Fig. 4

Fig. 5

601

Generate MPEG sequence header

602

603

Encode Frame → END? →

604

Rearrange DCT blocks to form MPEG macroblocks

605

Encode frame coding modes

606

Encode macroblock — (30 - 45) macroblocks

607

Encode macroblock modes

608

Encode quantization scale

609

Encode DCT block — 8 DCT blocks

610

Encode DC coefficients

611

Do Quantization

612

613

Encode AC coefficients

614

Do VLC lookup → EOB? →

FIG 6

8x8 pixel block

(Block 'P')

(Blocks 'P1', 'P2' )
Perform 4x8 DCT

(Blocks 'C1', 'C2')

2-4-8 DCT Coefficients

(Block 'C'
Top part-> block 'CT'
Bottom part->block 'CB')

FIG. 7

FIG. 8

' Frames (DCT coeff).

901

Encode a frame — 902 — END — Y

903

Encode a segment — x20x5

Get the macroblocks of one segment — 904

Encode one macroblock — x5 — 905

Encode a DCT block — x4 — 906

Mode selection (248 / 88 DCT) — 907

Quantization — 908

Reuse DC coeff. — 909

Reuse Ae Coeff — 910

911 — N

VLC Table — END — Y — Return — 912

See DIF header — 914 — 913

Distribute Overflowed data — 915

Fig. 9

MPEG Video Stream

1000

is a sequence convertible? → N → Exit

Y

MPEG 2 Video Stream.

1005

Decode a frame → END? → N / Y → DCT coeff from 1010

X 30 X 45

Decode a macroblock — 1015

Decode macroblock modes, quantization scale. — 1020

x 8

Decode a DCT block — 1025

Reuse DC coeff. — 1030

Reuse AC coeff. — 1035

1040

VLC Table → EOB? → N / Y → return

1045

Dequantization — 1050

1055

Fig. 10

Fig. 11